# FASCICULE DE BREVET EUROPEEN

(11) **EP 0 659 646 B1**
(45) Date de publication et mention de la délivrance du brevet: **25.06.1997**
(21) Numéro de dépôt: 94420332.2
(22) Date de dépôt: 30.11.1994
(51) Int. Cl.: B65C 3/00, B29C 65/78

(54) **Procédé pour appliquer un élément en matière souple déformable avec capacité d'adhésivité dans ou sur un corps volumétrique et le dispositif de mise en oeuvre**
Verfahren und Vorrichtung zum Aufbringen eines verformbaren und haftfähigen Elements auf oder in einen Volumenartikel
Method and apparatus for applying a deformable element with adhesion capacity in or on a volumetric article

(30) Priorité: 20.12.1993 FR 9315660
(43) Date de publication de la demande: 28.06.1995
(73) Titulaire: CENTRE STEPHANOIS DE RECHERCHES MECANIQUES HYDROMECANIQUE ET FROTTEMENT Société anonyme, F-42166 Andrezieux Boutheon Cédex (FR)
(72) Inventeur: Mariatte, René, F-42740 Saint Paul en Jarez (FR)
(74) Mandataire: Thivillier, Patrick

(56) Documents cités:
- EP-A- 0 569 846
- DE-A- 3 930 603
- US-A- 4 786 046
- PATENT ABSTRACTS OF JAPAN vol. 13 no. 588 (M-912) [3936] ,25 Décembre 1989 & JP-A-01 247126 (JAPAN STEEL WORKS LTD) 3 Octobre 1989,

## Description

L'invention se rattache au secteur technique du masquage des pièces.

Il est connu, pour des applications diverses, d'utiliser des masques que l'on fixe sur les pièces, pour obtenir une fonction technique spécifique ou parfois de simples effets décoratifs. Généralement, le masque peut être exécuté à partir d'un élément en matière souple déformable, avec capacité d'adhésivité, pour être fixé sur la pièce considérée.

Ces dispositions permettent de soumettre l'ensemble de la pièce équipée du masque, à tout type de traitement, chimique, thermique, ou autre, de manière à différencier l'ensemble de la pièce de la partie recevant le masque, qui doit subir un traitement distinct.

Lorsque la pièce à traiter est de forme géométrique simple délimitée par des faces planes, la mise en place du masque ne pose pas de difficulté particulière. Par contre, lorsque la pièce définit un corps volumétrique, notamment de forme révolutive, des problèmes de positionnement du masque apparaissent. Ces problèmes sont d'autant plus importants, lorsqu'il convient d'équiper l'intérieur d'un corps volumétrique d'un masque, selon une position déterminée et précise, compte-tenu de la fonction recherchée.

En effet, on se heurte au double problème, résultant des difficultés d'accès à l'intérieur du corps volumétrique et des formes complexes que doivent présenter parfois les masques pour certaines applications.

Par l'enseignement des brevets EP 0569846 et DE 3930603, on connaît un procédé permettant le transfert et le plaquage d'une garniture sur un support. Pour l'essentiel, ce procédé met en oeuvre un appareil comprenant un premier outil de moulage et un second outil de moulage, disposés en regard l'un de l'autre. Le moule supérieur tiend le panneau de garniture par aspiration. Le transfert de la garniture au niveau du moule inférieur s'effectue par des organes mécaniques, notamment par des vérins à pistons. La technique divulguée par ces brevets est difficilement applicable pour le masquage de pièces, notamment dans le cas de corps volumétriques de formes complexes, ce qui nécessite de résoudre des problèmes spécifiques.

L'invention s'est fixée pour but de remédier à ces inconvénients, de manière simple, sûre, efficace et rationnelle.

Le problème que se propose de résoudre l'invention est de pouvoir équiper tout type de corps volumétriques et plus particulièrement l'intérieur de corps volumétriques creux, de masques de formes quelconques pour des applications spécifiques, en respectant un positionnement précis du masque. Comme indiqué, le masque est réalisé par tout type d'élément en matière souple déformable avec capacité d'adhésivité, susceptible de présenter, lui même, différents agencements compte-tenu des fonctions qu'il doit remplir.

Pour résoudre ce problème, il a été conçu et mis au point un procédé selon lequel :
- on agit sur un moyen apte à faire plaquer l'élément dans les agencements en créant une force de dépression au niveau desdits agencements de la contre-forme,
- on enlève un film protecteur d'un adhésif que présente l'élément,
- on positionne le corps volumétrique sur (ou dans) la contre-forme équipée de l'élément,
- on agit sur des moyens aptes à créer une surpression pour transférer l'élément de la contre-forme dans (ou sur) le corps volumétrique et à le plaquer contre les parois de ce dernier en vue de sa fixation, en combinaison avec son pouvoir d'adhésivité.

Il apparait donc que le fait d'utiliser la technique du vide pour procéder notamment au transfert de l'élément de masquage sur le corps volumétrique à équiper, s'effectue sans aucun organe mécanique et permet d'appliquer le ou les éléments de masquage dans des corps volumétriques de formes très complexes.

Pour la mise en oeuvre du procédé, il a été conçu et mis au point, un dispositif remarquable en ce qu'il comprend au moins une contre-forme mâle (ou femelle), correspondant très sensiblement au corps volumétrique, ladite contre-forme présentant des agencements pour le positionnement de l'élément, la contre-forme étant assujettie à des moyens aptes à créer respectivement une force de dépression pour faire plaquer l'élément dans les agencements et une force de surpression apte à transférer ledit élément, en vue de sa fixation contre les parois du corps volumétrique, après son positionnement sur ou dans la contre-forme.

Pour résoudre le problème posé d'assurer le prépositionnement de l'élément au niveau de la contre-forme, les agencements de la contre-forme sont constitués par des empreintes en creux, formées dans son épaisseur, selon une direction correspondant à la direction souhaitée de l'élément dans ou sur le corps volumétrique.

Pour résoudre le problème posé d'assurer le maintien temporaire des éléments au niveau des agencements de la contre-forme, les moyens de plaquage sont constitués par un organe du type pompe à vide, apte à créer une dépression.

Pour résoudre le problème posé de transférer l'élément entre la contre-forme et le corps volumétrique, les moyens de transfert sont constitués par un organe du type compresseur, pour pousser et chasser l'élément, sous l'effet d'une injection d'air.

Dans le cas où les moyens de plaquage et le transfert mettent en oeuvre la technique du vide, la contre-forme présente des canalisations internes constituant un circuit d'air relié à la pompe à vide et au compresseur, lesdites canalisations étant en communication avec une pluralité de microperforations formées dans les agencements de la contre-forme.

Pour résoudre le problème posé de ne pas abîmer l'élément faisant office de masque, au moment du positionnement du corps volumétrique sur la contre-forme, cette dernière est réalisée en plusieurs parties accouplées à une embase commune, avec capacité d'articulation en étant assujettie à des organes élastiques de rappel, pour modifier son volume.

Un autre problème que se propose de résoudre l'invention, est d'assurer un positionnement angulaire précis et déterminé du coprs volumétrique par rapport à la contre-forme afin de disposer en conséquence l'élément, dans la partie déterminée dudit corps.

Un tel problème est résolu en ce que le corps volumétrique et la contre-forme présentent des moyens complémentaires d'indexation angulaire.

L'invention est exposée, ci-après plus en détail à l'aide des dessins annexés, dans lesquels:
La figure 1 est une vue en perspective des principaux éléments du dispositif pour la mise en place d'un élément faisant office de masque, à l'intérieur d'un corps volumétrique creux.

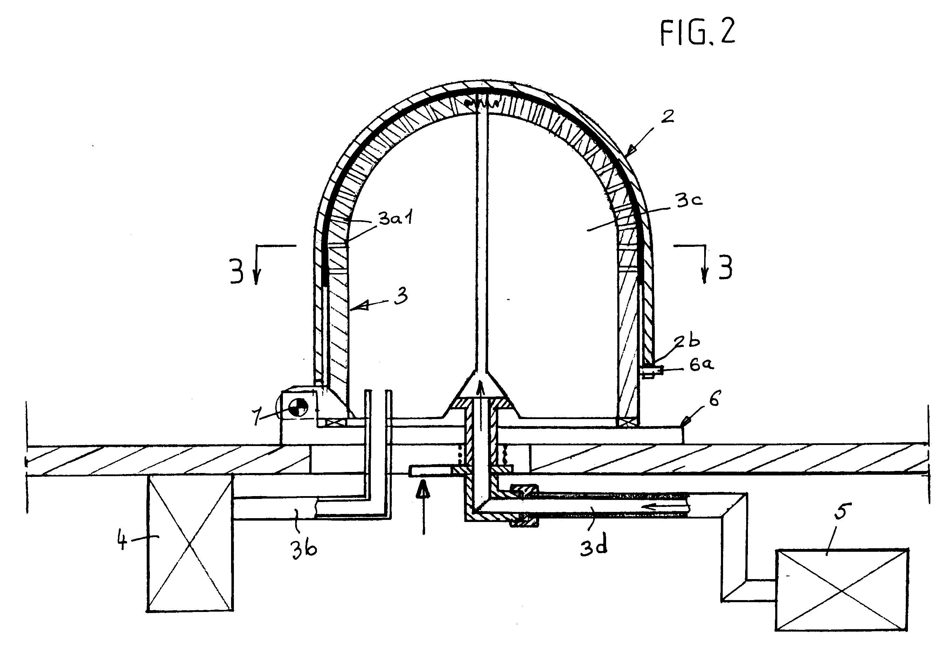

La figure 2 est une vue à caractère schématique du dispositif et une vue en coupe longitudinale de la contreforme.

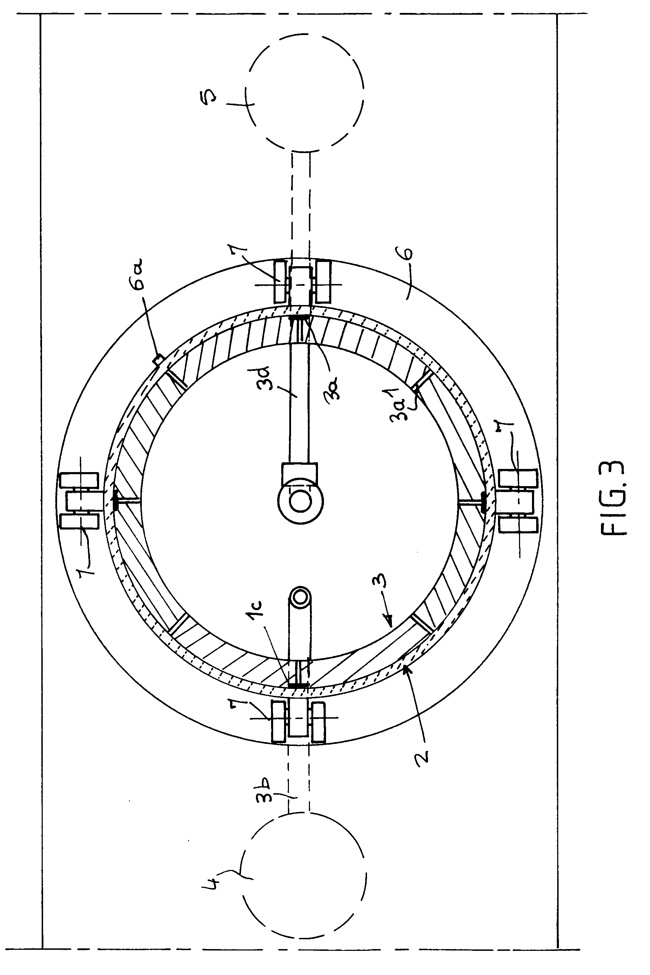

La figure 3 est une vue en coupe transversale considérée selon la ligne 3.3 de la figure 2.
Les figures 4, 5, 6, 7 et 8 sont des vues partielles à grande échelle et en perspective, montrant les principales phases du procédé selon l'invention.

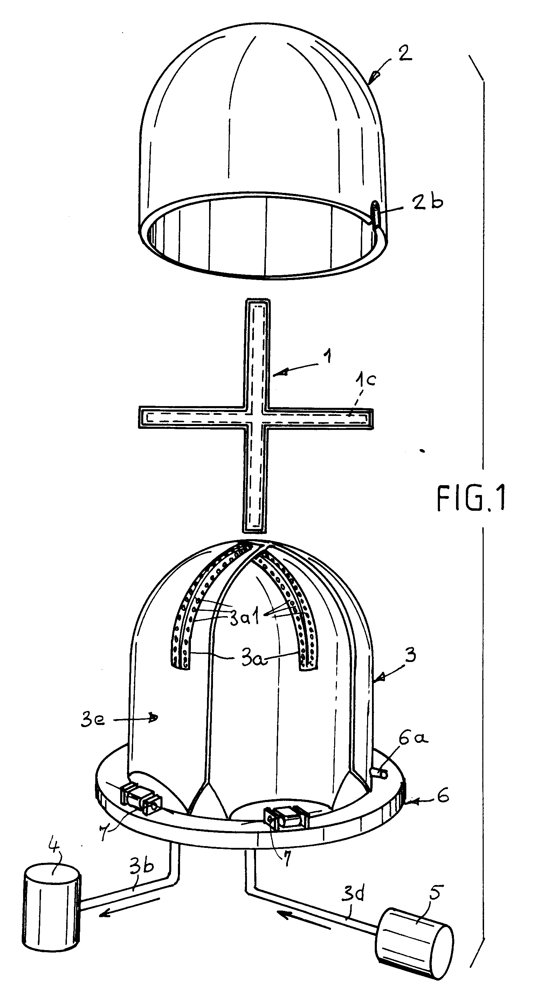

On a illustré figure 1, un exemple de réalisation d'un masque de forme quelconque, sous forme d'un élément (1) en matière souple déformable, avec capacité d'adhésivité. Cet élément (1) présente une pellicule de matière adhésive (1a), recouverte d'une manière parfaitement connue, par un film de protection détachable (1b). L'élément (1), en tant que tel, peut présenter tout type d'agencement en fonction des applications recherchées. Par exemple, cet élément (1) peut présenter des découpes préétablies (1c), correspondant à des pistes électriques, après un traitement approprié.

Le but recherché selon l'invention, est de pouvoir positionner, d'une manière très précise, cet élément (1) à l'intérieur d'un corps volumétrique creux (2), de forme et dimension quelconques. Bien évidemment, comme il sera indiqué dans la suite de la description, on n'exclut pas le fait de positionner cet élément (1) à l'extérieur du corps volumétrique (2), pour d'autres applications.

L'élément (1) est développé à plat de manière à correspondre à la forme souhaitée après mise en place à l'intérieur (ou à l'extérieur) du corps volumétrique (2).

Selon une caractéristique à la base de l'invention, I'élément (1) est positionné dans des agencements (3a) d'une contre-forme mâle (3), correspondant très sensiblement à l'intérieur (2a) du corps volumétrique (2). Ces agencements (3a) sont par exemple, constitués par des empreintes en creux dans lesquelles est positionné l'élément (1). La disposition de ces empreintes (3a) par rapport à la contre-forme (3) est déterminée pour correspondre au positionnement précis de l'élément (1) à l'intérieur du corps volumétrique (2).

La contre-forme (3) est assujettie à des moyens aptes à assurer le maintien temporaire de l'élément (1) dans les empreintes correspondantes (3a). Avantageusement, la contre-forme (3) est reliée à une pompe à vide (4) pour créer une dépression au niveau notamment, des empreintes (3a). Dans ce but, les empreintes (3a) sont en communication par une pluralité de micro-perforations (3a1) avec un réseau de canalisations (3b) reliées à la pompe à vide (4).

Dans ce but, la contre-forme (3) présente tout agencement interne permettant cette connexion d'une manière étanche, avec la pompe à vide, pour créer un réseau étanche. Par exemple, la contre-forme (3) présente un chambrage interne (3c) en communication avec la pompe à vide et avec les micro-perforations (3a1).

Suivant une autre caractéristique, la contreforme est assujettie à des moyens aptes à assurer le transfert de l'élément (1), prépositionné dans les empreintes (3a), à l'emplacement souhaité à l'intérieur du corps volumétrique (2), lorsque ce dernier est positionné et indexé angulairement sur ladite contre-forme (3). Plus particulièrement, ces moyens sont conformés pour exercer une force de poussée uniformément répartie dans les empreintes (3a), pour décoller l'élément (1) et le faire plaquer contre la partie correspondante du corps volumétrique (2) en le fixant dans cette position, compte-tenu de son pouvoir d'adhésivité (1a).

Avantageusement, la contre-forme (3) est reliée à un compresseur (5) pour souffler de l'air, au niveau de l'empreinte (3a). Comme précédemment, la contre-forme (3) présente tout réseau de canalisation (3d) permettant d'assurer un raccordement avec le compresseur (5).

La contre-forme (3) est réalisée en plusieurs parties (3e) accouplées à une base commune (6) d'une manière articulée. Dans l'exemple illustrée, chaque partie (3e) constitue un secteur relié au moyen d'un axe d'articulation (7), à l'embase (6). En outre, les parties constitutives (3e) de la contre-forme (3) sont assujetties à des organes élastiques de rappel, pour modifier son volume, notamment au moment de la mise en place du corps volumétrique (2) sur la contre-forme (3).

Suivant une autre caractéristique, le corps volumétrique (2) et l'embase (6) de la contre-forme (3) présentent des moyens complémentaires de positionnement et d'indexion angulaire. Par exemple, la base du corps volumétrique (2) présente, au niveau de son ouverture, des échancrures (2b) aptes à coopérer avec des pions complémentaires (6a) de l'embase (6). Ces dispositions sont importantes, compte-tenu de la nécessité du positionnement précis de l'élément (1) à l'intérieur du corps volumétrique (2), prédéterminé par l'orientation des empreintes (3a) de la contre-forme (3).

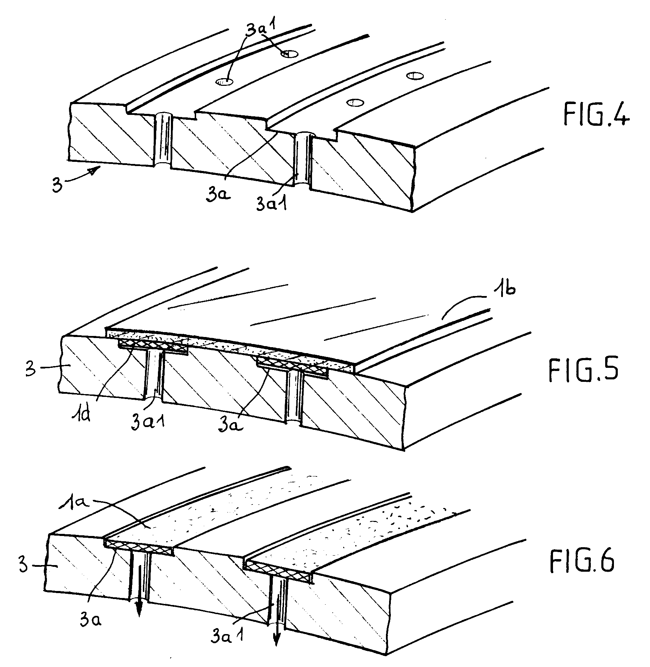

On analyse ci-après, le fonctionnement du dispositif selon l'invention, en se référant aux figures 4, 5, 6, 7, 8, en vue de la mise en place de l'élément (1) à l'intérieur du corps volumétrique (2), selon un positionnement précis prédéterminé par l'orientation des empreintes (3a).

L'élément (1) est positionné dans les empreintes (3a) de la contre-forme. Plus particulièrement, comme le montre la figure 5, ce sont les parties (1d) résultant des découpes (1c), qui sont positionnées dans les empreintes (3a). Le film protecteur (1b) de l'adhésif est donc situé à l'extérieur.

Après positionnement de l'élément (1) dans les empreintes (3a), la pompe à vide (4) est actionnée pour créer une dépression au niveau de desdites empreintes, en vue de faire plaquer l'élément (1). Dans cet état de mise en dépression, le film protecteur de l'adhésif est enlevé (figure 6).

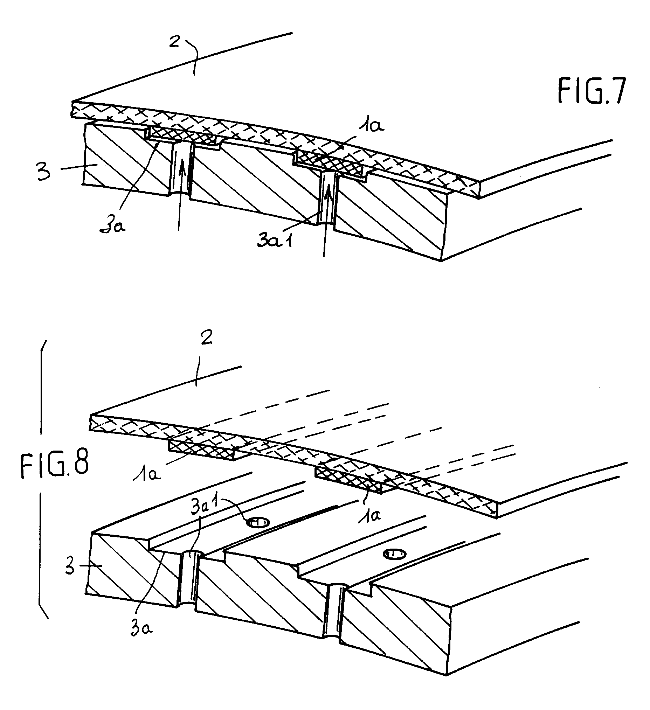

On engage ensuite le corps volumétrique (2) sur la contre-forme (3). Le corps (2) est indexé angulairement, sous l'effet de coopération des pions (3f), dans les encoches (6a) de l'embase (6). Comme indiqué, pour l'engagement du corps sur la contre-forme (3), les parties (3e) de cette dernière peuvent être très légèrement escamotées pour faciliter l'introduction en évitant de détériorer l'élément (1). Le compresseur (5) est alors mis en route, pour souffler de l'air, au niveau des empreintes (3a), en vue du transfert de l'élément (1) de la contre-forme à la partie correspondante du corps volumétrique (2) (figure 7).

L'élément (1) est donc soumis à une force de poussée, qui le décolle des empreintes (3a), pour le plaquer à l'intérieur du corps volumétrique, en assurant, de manière concomitante, sa fixation, compte-tenu de son adhésivité (1a).

Une fois le plaquage réalisé, les parties (3e) de la contre-forme sont très légèrement escamotées, afin d'assurer le retrait de cette dernière, sans risque de détérioration de tout ou partie de l'élément (1).

Il apparait donc, qu'après avoir enlevé le corps volumétrique (2) de la contre-forme (3), que l'ensemble de l'élément (1) se trouve automatiquement fixé d'une manière précise, à l'intérieur du corps volumétrique (2) (figure 8).

Comme indiqué, une conception inverse n'est pas exclue, c'est-à-dire une contre-forme femelle pour la mise en place de l'élément, non pas à l'intérieur d'un corps volumétrique, mais à l'extérieur de ce dernier.

L'invention trouve une application particulièrement avantageuse pour la mise en place d'une manière très précise, de tout type de masque pour des applications quelconques, dans des corps volumétriques de formes géométriques diverses et plus particulièrement à l'intérieur de corps volumétriques creux.

Les avantages ressortent bien de la description.

## Revendications

1. Procédé pour appliquer un élément de masquage en matière souple déformable avec capacité d'adhésivité dans ou sur un corps volumétrique, l'élément (1) étant conformé à plat et positionné dans des agencements (3a) d'une contre-forme mâle (3) (ou femelle), correspondant très sensiblement au corps volumétrique (2), caractérisé en ce que :
- on agit sur un moyen (4) apte à faire plaquer l'élément (1) dans les agencements (3a) en créant une force de dépression au niveau desdits agencements de la contre-forme (3),
- on enlève un film protecteur (1b) d'un adhésif que présente l'élément (1),
- on positionne le corps volumétrique (2) sur (ou dans) la contre-forme (3) équipée de l'élément (1),
- on agit sur des moyens (5) aptes à créer une surpression pour transférer l'élément (1) de la contre-forme (3) dans (ou sur) le corps volumétrique (2) et à le plaquer contre les parois de ce dernier en vue de sa fixation, en combinaison avec son pouvoir d'adhésivité.

2. Dispositif pour la mise en oeuvre du procédé selon la revendication 1, caractérisé en ce qu'il comprend au moins une contre-forme mâle (3) (ou femelle), correspondant très sensiblement au corps volumétrique (2), ladite contre-forme (3) présentant des agencements (3a) pour le positionnement de l'élément (1), la contre-forme étant assujettie à des moyens (4) et (5) aptes à créer respectivement une force de dépression pour faire plaquer l'élément (1) dans les agencements (3a) et une force de surpression apte à transférer ledit élément (1), en vue de sa fixation contre les parois du corps volumétrique (2), après son positionnement sur ou dans la contre-forme (3).

3. Dispositif selon la revendication 2, caractérisé en ce que les agencements (3a) de la contre-forme (3) sont constitués par des empreintes en creux, formées dans son épaisseur, selon une direction correspondant à la direction souhaitée de l'élément (1) dans ou sur le corps volumétrique (2).

4. Dispositif selon la revendication 2, caractérisé en ce que les moyens de plaquage sont constitués par un organe (4) du type pompe à vide, apte à créer une dépression au niveau des agencements (3a).

5. Dispositif selon la revendication 4, caractérisé en ce que les moyens de transfert sont constitués par un organe (5) apte à générer une pression de gaz, pour pousser et chasser l'élément, sous l'effet d'une injection d'air au niveau des agencements (3a).

6. Dispositif selon les revendications 4 et 5 ensemble, caractérisé en ce que la contre-forme (3) présente des canalisations internes constituant un circuit d'air relié à la pompe à vide (4) et au compresseur (5), lesdites canalisations étant en communication avec une pluralité de microperforations (3a1) formées dans les agencements de la contre-forme (3).

7. Dispositif selon la revendication 2, caractérisé en ce que la contre-forme (3) est réalisée en plusieurs parties accouplées à une embase commune (6), avec capacité d'articulation en étant assujetties à des organes élastiques de rappel, pour modifier son volume.

8. Dispositif selon la revendication 2, caractérisé en ce que le corps volumétrique (2) et la contre-forme (3) présentent des moyens complémentaires d'indexation angulaire (2b) (6a).

## Claims

1. Process to apply a masking element made of a deformable flexible material having an adhesive capability in or on a three-dimensional body, the element (1) being made so that it is flat and is positioned in the features (3a) of a male (or female) counter form (3) which essentially corresponds to the three-dimensional body (2), characterised in that:
- means (4) capable of pressing the element (1) into the features (3a) is operated, thus creating a negative-pressure force at the level of said features of the counter form (3),
- a protective film (1b) is removed from the adhesive on the element (1),
- the three-dimensional body (2) is positioned on (or in) counter form (3) fitted with the element (1),
- means (5) capable of creating a positive pressure is operated to transfer the element (1) from the counter form (3) in (or on) three-dimensional body (2) and pressing it against the walls of the latter in order to fix it in combination with its adhesive power.

2. Device to implement the process as claimed in claim 1, characterised in that it comprises at least one male (or female) counter form which corresponds essentially to the three-dimensional body (2), said counter form (3) having features (3a) to position the element (1) with the counter form being controlled by means (4) and (5) respectively capable of creating a negative-pressure force to press element (1) into the features (3a) and a positive-pressure force capable of transferring said element (1) so that it can be fixed against the walls of the three-dimensional body (2) after it has been positioned on or in the counter form (3).

3. Device as claimed in claim 2, characterised in that the features (3a) of the counter form (3) consist of recessed cavities formed in its thickness in a direction corresponding to the desired direction of element (1) in or on the three-dimensional body (2).

4. Device as claimed in claim 2, characterised in that the means of pressing consist of a device (4) of the vacuum pump type capable of creating a negative pressure at the features (3a).

5. Device as claimed in claim 4, characterised in that the beans of transfer consist of a device (5) capable of creating a gas pressure in order to push and expel the element by injecting air into the features (3a).

6. Device as claimed in claims 4 and 5 together, characterised in that the counter form (3) has internal ducts constituting an air circuit that is connected to vacuum pump (4) and compressor (5), said ducts communicating with a plurality of extremely small holes (3a1) in the features of the counter form (3).

7. Device as claimed in claim 2, characterised in that the counter form (3) is made in several parts that are hingedly attached to a common base (6) and are controlled by resilient return components that are used to modify the volume of said counter form.

8. Device as claimed in claim 2, characterised in that the three-dimensional body (2) and counter form (3) have additional means of angular indexing (2b) (6a).

## Patentansprüche

1. Verfahren zur Aufbringung eines Abdeckelements aus verformbarem und haftfähigem Weichmaterial in oder auf einem volumetrischen Körper, wobei das Element (1) flach ausgebildet ist und in Vorkehrungen (3a) einer männlichen (bzw. weiblichen) Gegenform (3) positioniert wird, die ziemlich genau dem volumetrischen Körper (2) entspricht, dadurch gekennzeichnet, daß:
- auf eine Einrichtung (4) eingewirkt wird, die geeignet ist, das Element (1) in die Vorkehrungen (3a) zu drücken, wobei im Bereich dieser Vorkehrungen der Gegenform (3) ein Unterdruck erzeugt wird,
- eine Schutzfolie (1b) von einem Aufkleber des Elements (1) entfernt wird,
- der volumetrische Körper (2) auf (oder in) die mit dem Element (1) bestückte Gegenform (3) positioniert wird,
- auf Einrichtungen (5) eingewirkt wird, die geeignet sind, einen Überdruck zu erzeugen, um das Element (1) von der Gegenform (3) in (bzw. auf) den volumetrischen Körper (2) zu übertragen und in Verbindung mit seinem Haftvermögen zwecks Befestigung gegen dessen Wände zu drücken.

2. Vorrichtung für die Umsetzung des Verfahrens nach Anspruch 1, dadurch gekennzeichnet, daß sie mindestens eine männliche (oder weibliche) Gegenform (3) besitzt, die ziemlich genau dem volumetrischen Körper (2) entspricht, wobei die Gegenform (3) Vorkehrungen (3a) für die Positionierung des Elements (1) aufweist und von Einrichtungen (4) und (5) abhängig ist, die geeignet sind, einen Unterdruck zu erzeugen, um das Element (1) in die Vorkehrungen (3a) zu drücken bzw. einen Überdruck zu erzeugen, der geeignet ist, das besagte Element (1) nach seiner Positionierung auf oder in der Gegenform (3) zum Zwecke der Befestigung an den Wänden des volumetrischen Körpers (2) zu übertragen.

3. Vorrichtung nach Anspruch 2, dadurch gekennzeichnet, daß die Vorkehrungen (3a) der Gegenform (3) aus in der Tiefe des Materials ausgeformten Vertiefungen bestehen, und zwar in einer Richtung, die der gewünschten Richtung des Elements (1) in oder auf dem volumetrischen Körper (2) entspricht.

4. Vorrichtung nach Anspruch 2, dadurch gekennzeichnet, daß die Andruckeinrichtungen aus einer Art Vakuumpumpe (4) bestehen, die geeignet ist, im Bereich der Vorkehrungen (3a) einen Unterdruck zu erzeugen.

5. Vorrichtung nach Anspruch 4, dadurch gekennzeichnet, daß die Übertragungseinrichtungen aus einem Organ (5) bestehen, das geeignet ist, einen Gasdruck zu erzeugen, um das Element unter Einwirkung einer Lufteindüsung im Bereich der Vorkehrungen (3a) vor- und herauszutreiben.

6. Vorrichtung nach Anspruch 4 und 5, dadurch gekennzeichnet, daß die Gegenform (3) innere Kanäle aufweist, die einen mit der Vakuumpumpe (4) und dem Kompressor (5) verbundenen Luftkreislauf bilden, wobei diese Kanäle mit mehreren Mikroperforationen (3a1) in Verbindung stehen, die in den Vorkehrungen der Gegenform (3) ausgebildet sind.

7. Vorrichtung nach Anspruch 2, dadurch gekennzeichnet, daß die Gegenform (3) aus mehreren Teilen gefertigt ist, die mit einem gemeinsamen Basisteil (6) verkoppelt sind und durch Einwirkung von elastischen Rückholorganen zwecks Volumenänderung gelenkig bewegt werden können.

8. Vorrichtung nach Anspruch 2, dadurch gekennzeichnet, daß der volumetrische Körper (2) und die Gegenform (3) sich einander ergänzenden Einrichtungen für die Winkelindizierung (2b) (6a) aufweisen.
